# EUROPEAN PATENT APPLICATION

(11) **EP 4 624 378 A1**
(43) Date of publication of application: **01.10.2025**
(21) Application number: 25166505.5
(22) Date of filing: 27.03.2025
(51) Int. Cl.: B65G 1/137, A47B 49/00, G07F 17/00, B65G 1/04

(54) **VERTICAL TRAY LOADER**

(30) Priority: 27.03.2024 US 202463570455 P
(71) Applicant: ATS Corporation, Cambridge, ON N3H 4R7 (CA)
(72) Inventor: SOLTYSIAK, Jacob, Rolling Meadows, IL 60008 (US); CONRAD, Kevin, Rolling Meadows, IL 60008 (US); CARZOLI, Matt, Rolling Meadows, IL 60008 (US); RANISZEWSKI, Rob, Rolling Meadows, IL 60008 (US)
(74) Representative: Noble, Nicholas

(57) **Abstract**

A vertical tray loader allows a plurality of trays to be reloaded while a tray is being processed. Tray sensors are provided in order to ensure that at least one tray slot remains empty after reloading of trays in order to allow the tray being processed to be returned to the loader.

## Description

### RELATED APPLICATIONS

The current application claims priority to US Provisional Application 63/570,455 filed March 27, 2024 and titled "Vertical Tray Loader," the entire contents of which are incorporated herein by reference for all purposes.

### TECHNICAL FIELD

The current application relates to equipment for use in an automated or semi-automated manufacturing or assembly environment, and in particular to a loading system for loading trays into the manufacturing or assembly environment.

### BACKGROUND

Automated, or semi-automated, manufacturing or assembly lines can perform one or more actions on components. The components or parts used in the process may be loaded into the system in various ways. For example, parts may be provided on trays which may hold one or more of the parts. The parts can be picked from the tray and one or more operations performed. The completed parts or components can be returned to the tray or to other locations.

It can be desirable to load a number of trays at once so that the manufacturing or assembly line can operate for longer periods of time. Loading multiple trays can be accomplished in various ways, including using a conveyor belt that can hold the plurality of trays and deliver them in sequence to the processing equipment. While the conveyor belt can provide a convenient mechanism for loading trays into the system, it may require a relatively large footprint in order to hold a plurality of trays simultaneously. Further, an additional conveyor or other mechanism may be required to unload trays after processing.

In automated or semi-automated processing environments, it is generally desirable, or required, to enclose processing equipment with shielding or housing in order to prevent operators from being in the vicinity of moving equipment. The conveyor belt and the processing equipment may be shielded from a loading location, in order to allow an operator to safely load trays onto the conveyor.

Additional, alternative and / or improved devices for loading trays into a manufacturing or assembly process is desirable.

### BRIEF DESCRIPTION OF THE DRAWINGS

Further features and advantages of the present disclosure will become apparent from the following detailed description, taken in combination with the appended drawings, in which:
FIG. 1 depicts an automated processing system with a vertical tray loader;
FIGs. 2A-2D depict a process of loading trays into the vertical tray loader of FIG. 1;
FIG. 3 depicts a further vertical tray loader;
FIG. 4 depicts a method of operating a vertical tray loader;
FIGs. 5A..7B depict an illustrative vertical tray loader;
FIG. 8 depicts the vertical tray loader of FIGs. 5A..7B with external housing components removed; and
FIG. 9 depicts internal components of the vertical tray loader of FIGs. 5A..7B.

### DETAILED DESCRIPTION

In accordance with the present disclosure there is provided a tray handling system comprising: a housing enclosing a plurality of tray slots; a delivery door through which a loaded tray loaded into one of the plurality of tray slots can be moved to and from a processing location; a loading door to allow an operator to remove processed trays and add reloaded trays to a subset of the tray slots; at least one sensor for detecting the presence or absence of trays in each of the tray slots; and a controller configured to control the opening and closing of the delivery door so that a tray can be moved out of or in the tray handling system through the delivery door.

In a further embodiment of the system, the controller is further configured to: control reloading of the tray slots while the tray is at the processing location: determining that all tray slots except at least one have been replaced with trays to leave at least one empty tray slot; and aligning the empty tray slot to receive delivery of the tray from the processing location through the delivery door.

In a further embodiment of the system, the controller if further configured to: unlock the loading door when the delivery door is closed and the tray slots are being refilled; lock the loading door once all tray slots except one have been replaced with full trays.

In a further embodiment of the system, the delivery door is in a fixed position.

In a further embodiment of the system, the delivery door raises and lowers to open and close.

In a further embodiment of the system, the system further comprises a pneumatic actuator to raise and lower the delivery door.

In a further embodiment of the system, the system further comprises sensors for determining if each tray present in the tray slots is full or empty.

In a further embodiment of the system, the plurality of tray slots are mounted on a frame that can be raised and lowered within the housing.

In a further embodiment of the system, the system further comprises a motor for raising and lowering the frame.

In a further embodiment of the system, the delivery door is moveable to align with any of the tray slots.

In a further embodiment of the system, the processing equipment can process a plurality of trays at once, and the plurality of trays are delivered through the delivery door.

In a further embodiment of the system, the number of empty tray slots present while refilling is equal to the number of trays simultaneously processed by the processing equipment.

In a further embodiment of the system, the tray slots are arranged vertically within the housing.

In a further embodiment of the system, the system further comprises refill indicators associated with respective tray slots to provide a visual indication of trays to be refilled.

In a further embodiment of the system, the delivery door is controlled automatically to allow trays to be delivered to and retrieved from the processing equipment.

In a further embodiment of the system, the system further comprises an actuator for moving trays between tray slots and the processing equipment when the delivery door is open.

A vertical tray loader is described further below that allows a plurality of trays to be loaded and un-loaded while a tray is being processed. The vertical tray loader includes sensors for determining if trays are loaded into each of the tray slots. During the un-loading and loading of trays, the trays are replaced, however at least one tray slot is not loaded. Keeping one of the tray slots empty during the loading ensures that the tray currently being processed can be returned to the vertical tray loader once the processing is complete. The vertical tray loader can have a door, or covering, that can open to allow one of the trays to be removed from, and returned to, the vertical tray loader. When a tray is being processed, a loading door can be opened to allow a plurality of trays to be removed and new trays loaded. The vertical tray loader can provide a relatively compact footprint while still providing a safe way to load multiple trays into the assembly system. Further, loading the trays while another tray is being processed can allow for the processing equipment to run without stopping.

The vertical tray loading system is described further herein with respect to processing components delivered in the trays. That is, full trays of components are described as being loaded into the vertical tray loader and processed by the processing equipment and then the empty trays removed from the loader and replaced with new full trays. It is possible that empty trays can be loaded into to the loader, processed in order to fill the trays with components and the filled trays removed and replaced with new empty trays. Other combinations of loading filled and or empty trays and removing empty or filled trays are possible.

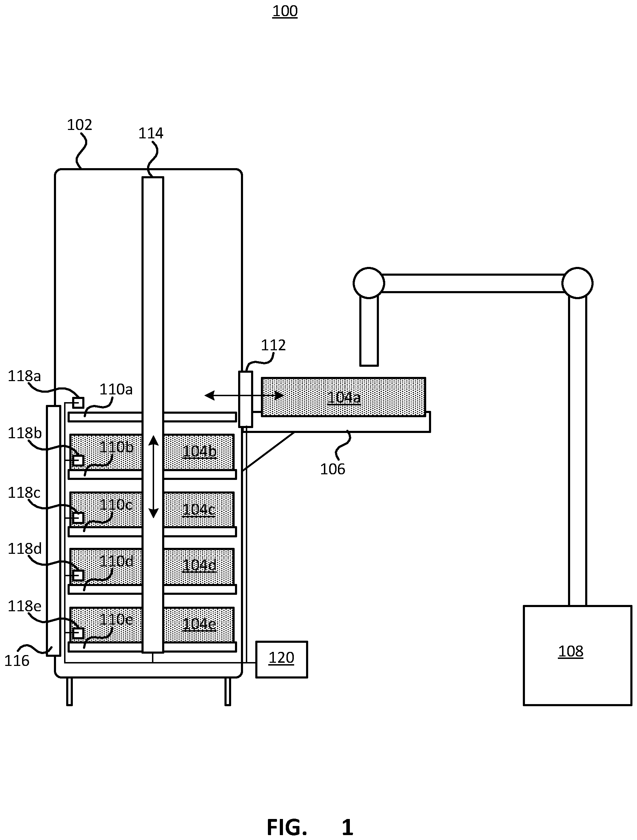

FIG. 1 depicts an automated processing system with a vertical tray loader. The automated processing system 100 includes a vertical tray loader 102 that can deliver one or more trays 104a..104e (referred to collectively as trays 104) to a processing location 106. The trays may hold one or more components or parts that are required by a processing step. Processing equipment, depicted as robotic arm 108 can perform one or more operations on or with the component, or components, on the tray 104a at the processing location. For example, the tray 104a may hold a plurality of individual components and the robotic arm may pick the component from the tray and place it on a fixture for further processing, or performing some other action on or with the part. The part may be returned to the tray 104a at the processing location 106.or may proceed to other processing locations.

In addition to the tray 104a that is located at the processing location 106, a plurality of trays 104b..104e are located within the vertical tray loader. Each of the trays 104a may be supported on or by a respective tray slot 110a..110e (referred to collectively as tray slots). Each of the tray slots are arranged vertically one above the other. As depicted, a tray may be moved from a tray slot to the processing location 106 through a delivery door 112. The delivery door 112 can be used to separate the vertical tray loader from the processing equipment 108. This separation may be important for safety allowing the processing equipment 108 to be operating and possibly moving while trays are being unloaded/loaded out of/into the vertical tray loader.

The delivery door 112 may be controlled to open and close an opening in the housing of the vertical tray loader. The delivery door may rotate open on hinges or may slide out of the opening. In FIG. 1, the delivery opening that the delivery door 112 covers, is in a fixed location that is aligned with the processing location 106. The vertical tray loader 102 may further include a lifting actuator 114 that can raise and lower the tray slots 110, and the supported trays 104. The tray slots 110 can be raised and lowered in order to align a tray slot with the delivery door, allowing the tray at the aligned slot to be moved to and from the processing location when the delivery door is open.

During processing, a tray is moved from the vertical tray loader into the processing location 106 and the processing equipment can perform the required tasks. When the last full tray of the vertical tray loader is being processed by the processing equipment, and so the trays remaining in the vertical tray loader should be replaced with new trays, a loading door 116 can be opened and an operator can replace the trays with full trays. In order to ensure a tray slot remains unfilled during the loading of new trays, and so can receive the tray currently being processed, the vertical tray loader includes a plurality of tray sensors 118a..118e that can determine if a tray is located in the respective tray slot.

The vertical tray loader 102 may include a controller 120 that controls operation of the vertical tray loader. The controller may track which trays in a tray slot have been processed, and which trays have not. The controller can raise and lower the tray slots in order to move trays between the vertical tray loader and the processing location. In order to provide additional safety to operators, the controller can ensure that the loading door is closed and possibly locked when the delivery door is unlocked and possibly open. In order to unlock the loading door 116, the delivery door is first closed. Similarly, in order to open the delivery door, the loading door must first be closed, and possibly locked. Further, during the reloading of trays, the controller may ensure that there remains an empty tray slot in order to receive the tray currently being processed.

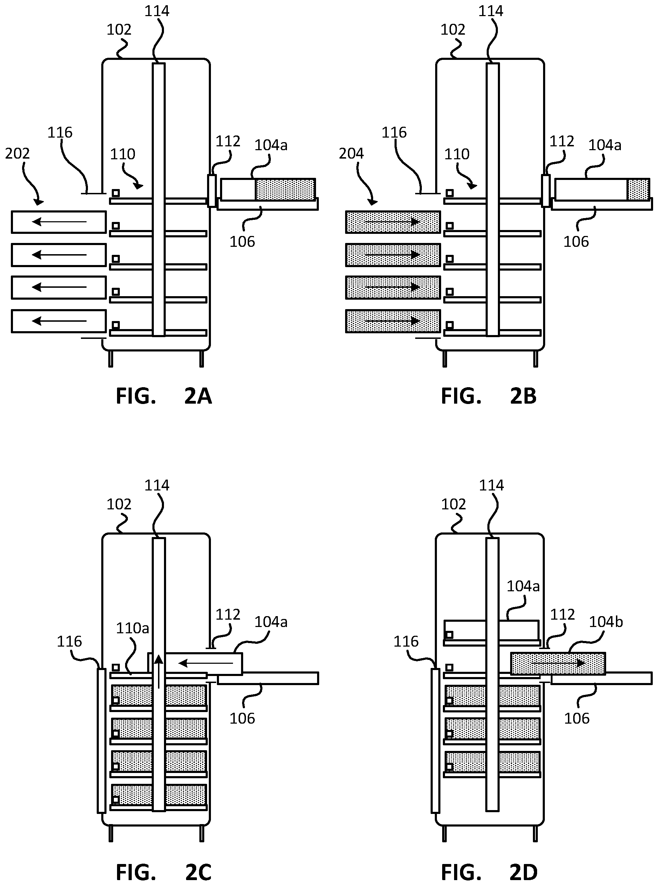

FIGs. 2A-2D depict a process of loading trays into the vertical tray loader of FIG. 1. It is assumed that prior to FIG. 2A, that the four bottom trays 202 have been processed and a full 104a tray has been moved to the processing location 106. The tray 104a at the processing location 104 is being processed, as depicted by the partially filled rectangle. When the tray 104a is moved from the tray slots 110 to the processing location, the delivery door 112 is closed. With the delivery door closed, and all the remaining trays in the vertical tray loader needing to be replaced, the loading door 116 may be unlocked. An operator may open the loading door 116 and may remove all of the empty trays 202 from the tray slots.

As depicted in FIG. 2B, while the tray 104a continues to be processed, the operator may load a plurality of trays 204 back into the vertical tray loader through the open loading door 116. As depicted, the operator loads all of the tray slots except one with full trays 204. The controller may use the tray sensors to verify that there is at least one empty tray slot prior to locking the loading door 116. With the trays reloaded and the loading door 116 closed, and possibly locked, as depicted in FIG. 2C, the processing of tray 104a can be finished and then the delivery door can be opened and the processed tray 104a returned from the processing location 106 to the empty tray slot 110a in the vertical tray loader. With the processed tray 104a returned to the empty tray slot 110a, the tray slots 110 may be raised by the lifting actuator 114 in order to align the delivery door 112 and processing location 106 with a tray slot that has a full tray in it. As depicted in FIG. 2D, once the next tray slot is aligned, the delivery door 112 can be opened and the tray moved from the vertical tray loader to the processing location 106.

Although the above has described reloading all of the tray slots except one with full trays, it will be appreciated that fewer tray slots can be reloaded. Further, it is possible that the reloaded trays are only partially filled with components or parts. Similarly, the processed trays are described as being empty, but they may not be fully empty and may have one or more components remaining. Further, the above has described raising and lowering the tray slots in order to align the tray slots with the delivery door and processing location, however, it is possible that the tray slots remain stationary and the processing location is moved in order to align with one or more of the tray slots.

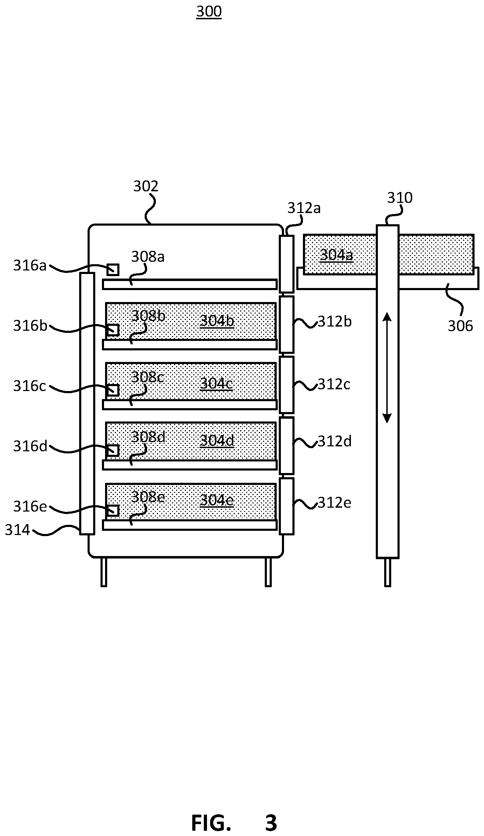

FIG. 3 depicts a further vertical tray loader. The tray loader 300 is similar to that described above and allows multiple trays to be reloaded into the loader 300 while a tray is being processed. The vertical tray loader comprises a housing 302 that can enclose a plurality of trays 304a..304e (referred to collectively as tray 304)on respective tray slots 308a..308e (referred to collectively as tray slots 308). Rather than moving the tray slots to align with the processing location 306. A lifting actuator 310 can raise and lower the processing location 306 in order to align with each of the tray slots 308. Each tray slot may be associated with a respective tray occupancy sensor 316a..316e (referred to collectively as tray occupancy sensors 316).

When retrieving a tray from the vertical tray loader, or returning a tray to the vertical tray loader, the processing space 306 is raised or lowered to align with the appropriate tray slot and a delivery door opened in order to allow the tray to be to or from the respective tray slot. As depicted, each tray slot 308 may be associated with a respective delivery door 312a..312e (referred to collectively as delivery doors 312) that can be opened to allow delivery to or from the vertical tray loader when the processing location as aligned. Although FIG. 3 depicts a plurality of individual delivery doors 312, it is possible to provide a single delivery door that moves with the processing location. If a single moveable delivery door is provided, the openings associated with each tray slot may be covered as the door is moved

Similar to the vertical tray loader described above, the tray loader 300 includes a loading door that can opened when the delivery door is closed and used to unload processed trays and reload new trays into the tray slots. The tray occupancy sensors 316 can determine if a tray slot remains empty during reloading in order to provide a tray slot for the tray currently being processed.

The vertical tray loaders described above are depicted as providing a single tray from a tray slot to a processing location at a time. It is possible that each tray slot may hold a plurality of trays that can be provided to the processing location. Further, it is possible to provide trays from multiple locations to the processing location for processing at the same time. Further, while a single processing location is descried, it is possible to have multiple processing locations. The number of tray slots that remain empty during the reloading is equal to, or greater than, the number of processing locations.

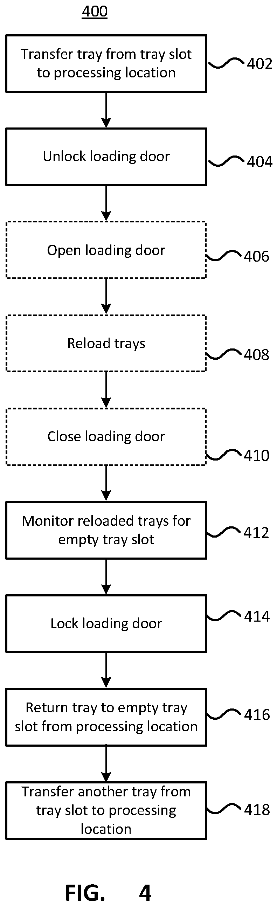

FIG. 4 depicts a method of operating a vertical tray loader. The method 400 may be implemented by a vertical tray loader as described above. For example, the method may be implemented by a controller for controlling the components of the vertical tray loader. It is assumed that all but one of the trays in the vertical tray loader has been processed prior to beginning the method depicted in FIG. 4. The method 400 transfers a tray from a tray slot to the processing location (402). Transferring the tray may be performed when the loading door is closed, and possibly locked. With the loading door closed, the delivery door may be opened and a delivery actuator operated in order to move the tray from the tray slot to the processing location, and then the delivery door may be closed. With the deliver door closed, and all of the remaining trays having been processed, the loading door may be unlocked (404). An operator may open the loading door (406), reload the trays (408) and then close the loading door (410). One or more output devices for indicating which of the tray slots should be reloaded. As a simple example, each tray slot may be associated with an indicator light indicating which trays should be replaced and/or which should not be replaced. When the loading door is closed, the tray sensors determine what tray slots have trays in order to ensure that there is at least one empty tray slot (412). If there is not an empty tray slot the operator may be notified that at least one tray should be removed. The notification may be provided to the operator in various ways including as a visual or audio queue or notification on a control device. Although depicted as occurring after closing the loading door, it is possible to monitor the tray slots continuously as they are being reloaded. When the loading door is closed, and assuming that there is an empty tray slot, the loading door may be locked (414). Once the processing of the tray being processed during the reloading process is completed, the tray can be returned to the empty tray slot from the processing location (416). Returning the tray may include ensuring the loading door is locked, aligning the empty tray slot and processing location, unlocking the delivery door and then moving the processed tray to the empty slot. Another tray can then be moved from the tray slot to the processing location (418). The processing of trays can continue sequentially until the last tray is delivered to the processing location and the reloading process can again be performed.

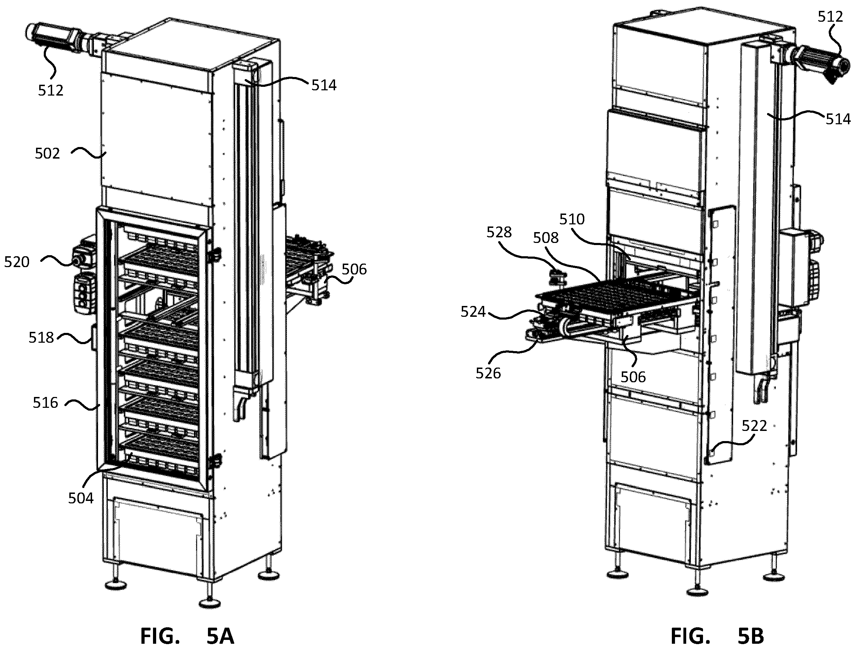

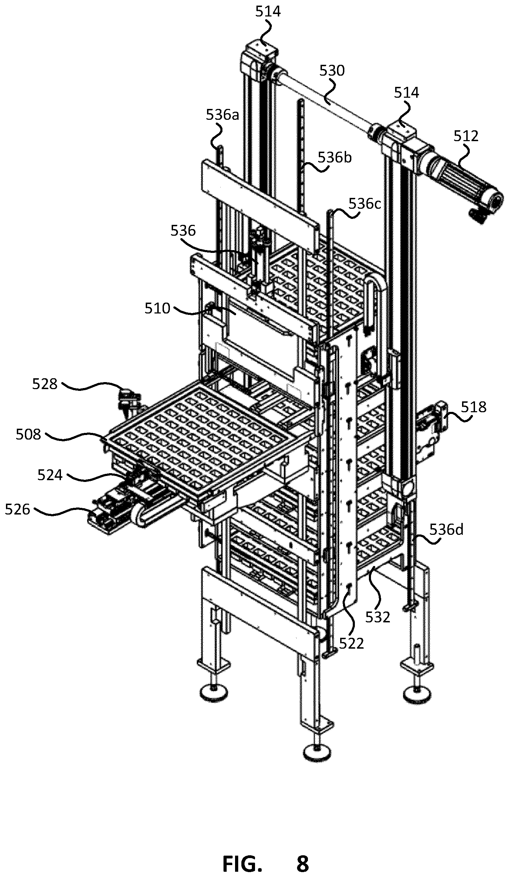

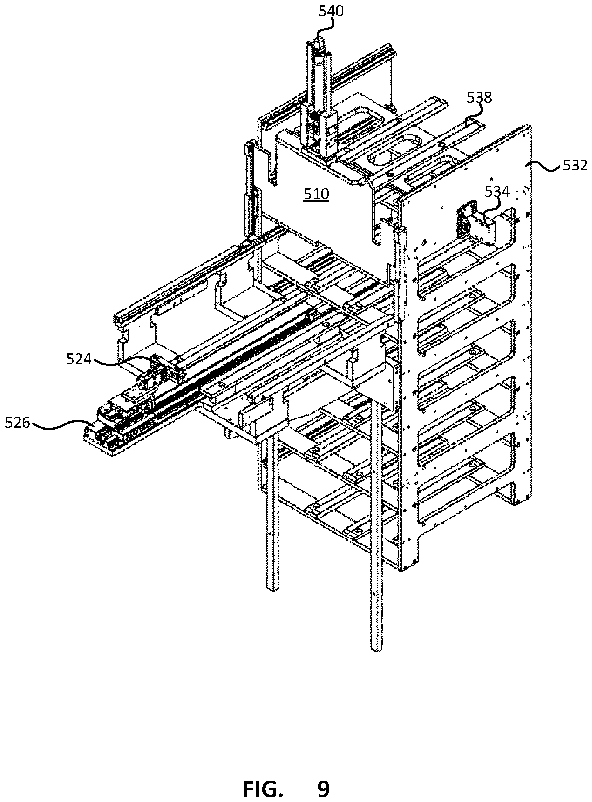

FIGs. 5A..7B depict different views of an illustrative vertical tray loader. FIG. 8 depicts the vertical tray loader of FIGs. 5A..7B with external housing components removed. FIG. 9 depicts internal components of the vertical tray loader of FIGs. 5A..7B. The same reference numbers are used to refer to the same components throughout FIGs. 5A..9. The vertical tray loader has on outer housing 502 which may comprises a plurality of pieces connected to an internal frame. The housing 502 encloses a plurality of internal trays. A processing location 506 may be located on a side of the vertical tray loader. A tray 508 may be moved from the internal trays to the processing location through an opening in the housing that may be controllably covered by a door 510.

The plurality of internal trays 504 may be held by a plurality of tray slots or tray bearing surfaces 538, most clearly seen in FIG. 9. The trays may be raised and lowered in order to align a particular tray with the processing location 506. A motor 512 may drive a lifting mechanism 514 that can raise and lower the tray slots and trays that are in the tray slots. The lifting mechanism may comprise a respective mechanism located on each side of the housing which are coupled together by a connecting rod 530, most clearly depicted in FIG. 8. A loading door 516 may be located on a side of the housing 502, which is depicted as being the side opposite the delivery door 510, although it may alternatively be arranged on a side adjacent the delivery door. The loading door 516 allows an operator to remove trays from the vertical tray loader and load new trays into the loader. The loading door 516 can be controllably locked and unlocked by lock 518. The housing may include one or more controls such as an emergency stop button etc.

The vertical tray loader may include a number of tray occupancy sensors to detect the presence, or absence, of a tray in each tray slot. The sensors may be provided in various ways, including for example as break-beam type sensors 522 arranged at the respective tray slots. The sensors 522 can detect the presence or absence of the trays in each tray slot. In addition to the tray sensors 522, additional sensors may be provided, for example to determine if the tray is full, or empty, or possibly partially filled.

The tray sensors 522 are depicted as being mounted on the housing and as such do not move with the tray slots as the trays are raised and lowered. The tray slots may be moved into a verification position in which the tray slots are aligned with the tray sensors 522. Although as depicted there is one sensor per tray slot, and as such the presence or absence of trays in each tray slot can be determined simultaneously, it is possible that only one sensor is provided and the tray slots can be raised/lowered in order to move each tray slot into a respective tray verification position in which the sensor can determine the presence or absence of a tray in the tray slot aligned with the sensor. One or more sensors can be provided in order to verify the presence of trays in a plurality of tray slots. Additionally or alternatively, the tray sensors may be mounted in order to move with the tray slots.

A tray may be moved from the internal tray slot through the delivery door to the processing location. The tray may moved by a delivery actuator. The delivery actuator may comprise a gripper 524 that can releasably grab an aligned tray and retract the tray to the processing location. The gripper 524 may slide on a track section 526 in order to allow the gripper to move the tray between the processing location and the aligned tray slot. One or more additional sensors 528 may be used in order to determine that a tray has been fully moved to the positioning location.

The plurality of tray slots may be mounted to a tray frame 532 that can be connected to the lifting mechanism 514. The tray frame 532 may be connected to the lifting mechanism by frame connectors 534. Lifting guide rails 536a..536d may be fixed to the housing and can be coupled to a bearing guide of the tray frame 532 in order to guide the frame as it is raised and lowered in order to align a particular tray slot with the delivery door and processing location. Each tray slot may comprise one or more tray slot bearing surfaces 538. The vertical tray loader is depicted as comprising seven tray slots arranged above each other. The processing location may have corresponding tray bearing surfaces in order to support a tray as it is moved. A delivery door 510 may be controllably raised and lowered, or opened and closed, by an actuator 540. The delivery door can cover a delivery opening in the housing in order to separate the interior of the vertical tray loader from the processing equipment. In addition to providing a separation between the interior tray slots and moving procession equipment, which allows an operator to safely replace trays while the processing equipment is operating, the door may also serve to provide a physical separation between the two separate environments.

Although the delivery door depicted in vertical tray loader 500 does not provide a seal between the interior of the tray loader and the processing equipment, it is possible to provide a seal in order to separate the two environments. Such an arrangement may allow the processing equipment to operate in a clean environment, or at least a cleaner environment compared to where the operators load trays from. Once trays are reloaded into the tray loader by an operator, the internal housing can be cleaned, for example using filters, UV light, inert gases, etc.

It will be appreciated that the vertical tray loaders described above may take various forms and may have additional, or fewer, tray slots. Although not necessary, the number of tray slots may depend in part on a length of time it takes to process a tray of components. It may be desirable to have the number of tray slots selected such that an operator can complete the replacement of trays during the processing of a tray.

The vertical tray loader described above allows an operator to safely reload trays while a tray is being processed. This may allow the processing of the trays to be substantially continuous. In some applications, it may be beneficial, desirable, or at least possible to reload all of the tray slots simultaneously. In such an application, a processed tray can be returned to the vertical tray loader, the loading door opened and all of the tray slots reloaded with new trays, which may be verified by one or more tray sensors, before closing the loading door and returning to processing of trays.

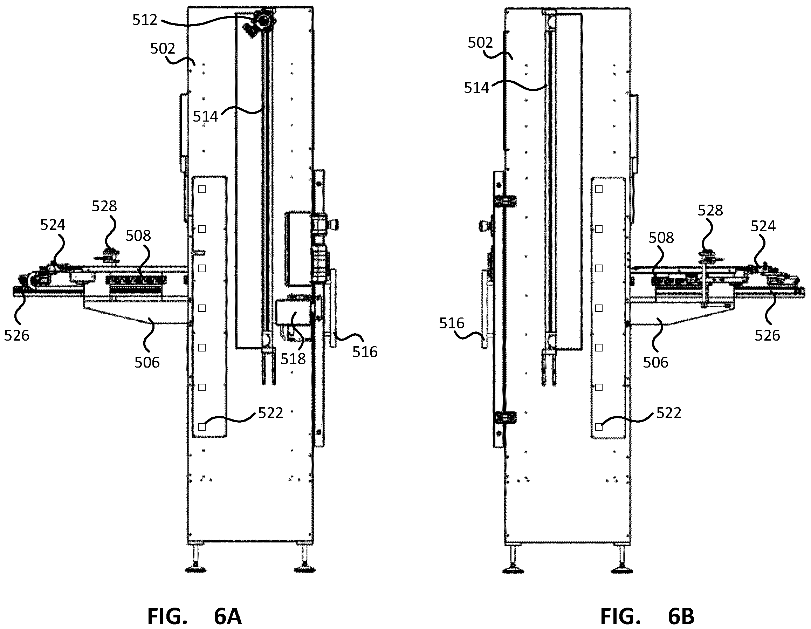

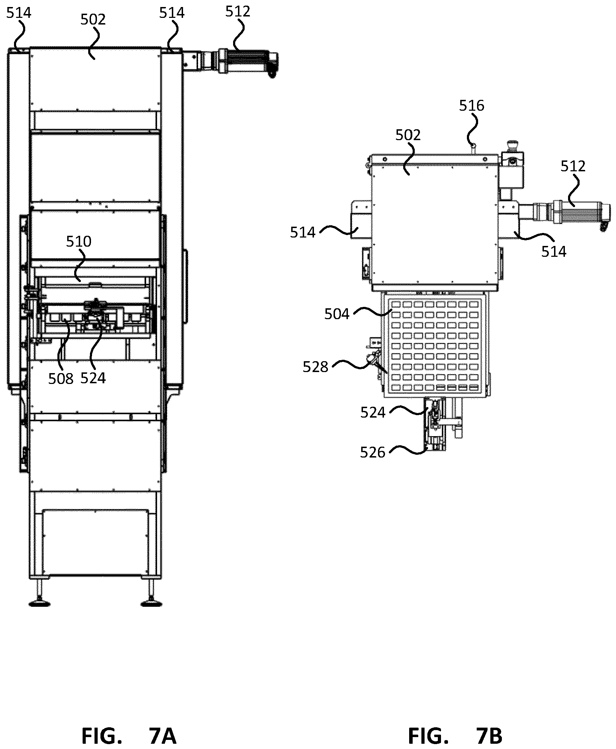

It will be appreciated by one of ordinary skill in the art that the system and components shown in FIGs. 1 - 9 may include components and/or steps not shown in the drawings. For simplicity and clarity of the illustration, elements in the figures are not necessarily to scale, are only schematic and are non-limiting of the elements structures. It will be apparent to persons skilled in the art that a number of variations and modifications can be made without departing from the scope of the invention as defined in the claims.

Although certain components and steps have been described, it is contemplated that individually described components, as well as steps, may be combined together into fewer components or steps or the steps may be performed sequentially, non-sequentially or concurrently. Further, although described above as occurring in a particular order, one of ordinary skill in the art having regard to the current teachings will appreciate that the particular order of certain steps relative to other steps may be changed. Similarly, individual components or steps may be provided by a plurality of components or steps. One of ordinary skill in the art having regard to the current teachings will appreciate that the components and processes described herein may be provided by various combinations of software, firmware and/or hardware, other than the specific implementations described herein as illustrative examples.

The techniques of various embodiments may be implemented using software, hardware and/or a combination of software and hardware. Various embodiments are directed to apparatus, e.g. a node which may be used in a communications system or data storage system. Various embodiments are also directed to non-transitory machine, e.g., computer, readable medium, e.g., ROM, RAM, CDs, hard discs, etc., which include machine readable instructions for controlling a machine, e.g., processor to implement one, more or all of the steps of the described method or methods.

Some embodiments are directed to a computer program product comprising a computer-readable medium comprising code for causing a computer, or multiple computers, to implement various functions, steps, acts and/or operations, e.g. one or more or all of the steps described above. Depending on the embodiment, the computer program product can, and sometimes does, include different code for each step to be performed. Thus, the computer program product may, and sometimes does, include code for each individual step of a method, e.g., a method of operating a communications device, e.g., a wireless terminal or node. The code may be in the form of machine, e.g., computer, executable instructions stored on a computer-readable medium such as a RAM (Random Access Memory), ROM (Read Only Memory) or other type of storage device. In addition to being directed to a computer program product, some embodiments are directed to a processor configured to implement one or more of the various functions, steps, acts and/or operations of one or more methods described above. Accordingly, some embodiments are directed to a processor, e.g., CPU, configured to implement some or all of the steps of the method(s) described herein. The processor may be for use in, e.g., a communications device or other device described in the present application.

Numerous additional variations on the methods and apparatus of the various embodiments described above will be apparent to those skilled in the art in view of the above description. Such variations are to be considered within the scope of the current disclosure.

## Claims

1. A tray handling system (102) comprising:
a housing enclosing a plurality of tray slots (110a..110e);
a delivery door (112) through which a loaded tray (104a..104e) loaded into one of the plurality of tray slots can be moved to and from a processing location 106;
a loading door (116) to allow an operator to remove processed trays and add reloaded trays to a subset of the tray slots;
at least one sensor (118) for detecting the presence or absence of trays in each of the tray slots; and
a controller (120) configured to control the opening and closing of the delivery door so that a tray can be moved out of or in the tray handling system through the delivery door.

2. The system of claim 1, wherein the controller is further configured to:
control reloading of the tray slots while the tray is at the processing location:
determining that all tray slots except at least one have been replaced with trays to leave at least one empty tray slot; and
aligning the empty tray slot to receive delivery of the tray from the processing location through the delivery door.

3. The system of claim 1 or 2, wherein the controller if further configured to:
unlock the loading door when the delivery door is closed and the tray slots are being refilled;
lock the loading door once all tray slots except one have been replaced with full trays.

4. The system of any one of claims 1 to 3, wherein the delivery door is in a fixed position.

5. The system of any one of claims 1 to 4, wherein the delivery door raises and lowers to open and close.

6. The system of claim 5, further comprising a pneumatic actuator to raise and lower the delivery door.

7. The system of any one of claims 1 to 6, further comprising sensors for determining if each tray present in the tray slots is full or empty.

8. The system of any one of claims 1 to 7, wherein the plurality of tray slots are mounted on a frame (114) that can be raised and lowered within the housing.

9. The system of claim 8, further comprising a motor for raising and lowering the frame.

10. The system of any one of claims 1 to 7, wherein the delivery door is moveable to align with any of the tray slots.

11. The system of any one of claims 1 to 10, wherein a plurality of trays are processed at once, and the plurality of trays are delivered through the delivery door,
optionally wherein the number of empty tray slots present while refilling is equal to the number of trays simultaneously processed by the processing equipment.

12. The system of any one of claims 1 to 11, wherein the tray slots are arranged vertically within the housing.

13. The system of any one of claims 1 to 12, further comprising refill indicators associated with respective tray slots to provide a visual indication of trays to be refilled.

14. The system of any one of claims 1 to 13, wherein the delivery door is controlled automatically to allow trays to be delivered to and retrieved from the processing location.

15. The system of any one of claims 1 to 14, further comprising an actuator for moving trays between tray slots and the processing location when the delivery door is open.
